# EUROPEAN PATENT SPECIFICATION

(11) **EP 3 115 403 B1**
(45) Date of publication and mention of the grant of the patent: **08.11.2017**
(21) Application number: 16177721.4
(22) Date of filing: 04.07.2016
(51) Int. Cl.: C08K 3/10, C09D 1/02, C09D 1/04, C09D 7/00, C08K 3/36, C09D 183/00, C09D 183/02, C09D 183/04

(54) **AN INORGANIC COATING COMPOSITION WHICH CAN BE CURED AT LOW TEMPERATURE AND A PREPARATION METHOD THEREOF**
ANORGANISCHE BESCHICHTUNGSZUSAMMENSETZUNG, DIE BEI NIEDRIGER TEMPERATUR AUSGEHÄRTET WERDEN KANN, UND HERSTELLUNGSVERFAHREN DAFÜR
COMPOSITION DE REVÊTEMENT INORGANIQUE POUVANT ÊTRE DURCIE À BASSE TEMPÉRATURE ET SON PROCÉDÉ DE PRÉPARATION

(30) Priority: 08.07.2015 CN 201510396824
(43) Date of publication of application: 11.01.2017
(73) Proprietor: Liu, Xiaodong, Beijing 100005 (CN)
(72) Inventor: Liu, Xiaodong, Beijing 100005 (CN)
(74) Representative: Gulde & Partner

(56) References cited:
- WO-A1-2008/075815
- CN-A- 104 059 398
- JP-A- H01 163 276
- US-A1- 2012 070 626

## Description

### Technical Field of the Invention

The present invention relates to coating composition and in particular, to an inorganic coating composition, which can be cured at low temperature and a preparation method thereof. More particularly, alkoxy-silane and SiO₂ particles are dispersed in water, react with each other by hydrolysing first and then condensation-polymerizing. Then, for giving the physical-chemical property, add the first functional additives, inorganic pigment powder, and other functional additives, form an inorganic coating composition which can be cured at low temperature.

### Background of the Invention

The paint or coating in prior art is used to protect the structures and buildings, prolong life of the structures and buildings, and maintain beauty of the structures and buildings over a long period of time. Thus, paint or coating should be easy to use and odourless. The film formed by the coating should have better gloss, maintain the film for long time, should have good chemical resistance, for example, solvent resistance, chemical resistance, weather resistance, water resistance, antibacterial, and should have good physical properties, for example, non-flammable, flame-retardant, waterproof, high adhesive force, insulation, and so on, and should be not harmful to human body and not cause environmental pollution, insure the safety. These properties are the final goal of paint or coating.

Traditional anti-corrosion coatings or building coatings are made by organic compound that is extracted from crude oil and mixed with a variety of chemicals, so it contains a large amount of organic elements. When the paint or coating is applied, over a period of time, the cracks will appear on the surface of the film formed by coating. Microorganisms will propagate in the cracks, and the film will peel off. If being exposed to ultraviolet light for a long time, the film will discolour, and the pollution resistance will go down. In addition, most paints contain various pollutants that are harmful to human body, such pollutant will cause skin diseases, headaches, vomiting sickness and other environmental diseases. Moreover, the petroleum storage is limited, but the demand is sharply increased. The supply of raw materials of the paint production is also getting more and more intense. At the same time, in order to solve problem of the traditional coatings above mentioned, various inorganic coatings are provided. The inorganic coating mainly comprises binders, pigments, solvents, and additives. The conventional ceramic coatings contain binders, which are organic polymers such as silicon, epoxy resin, or terylene resin, ceramic filling powder, or organic solvents such as acetone, benzene, toluene, xylene and ethyl acetate. Most of the additives are organic material as well.

Water-based inorganic coatings have many advantages that organic coatings does not have, such as high hardness, excellent weather resistance and stain resistance, solvent resistance, long-term heat resistance and environmentally friendliness, and so on. So they are used in industry anticorrosive paint, civil building coating and special coating widely.

Document WO-A-2008/075815 describes an inorganic-ceramic coating composition comprising hydrolyzed and condensation-polymerized inorganic solution, functional fillers, oxidized steel color powder and functional additives. The inorganic solution is prepared by reacting organosilane(s) and water that contains silica nano or microparticles. The functional fillers are potassium titanate and/or alumina. The functional additives are tourmaline and/or rare earth ore. Also disclosed is a method for preparation of inorganic-ceramic coating composition by combining and stirring 100 wt. % of organosilane(s) and silica sol (35-45 wt.%) at 40-50°C to obtain an inorganic solution in sol state, mixing and stirring inorganic solution, functional fillers, color powder and functional additives, homogenizing at high speed for 1-2 hours, and passing homogenized material through 325-1000 mesh net and extracting filtered particles. The amount of potassium titanate is 15 to 20 wt.% and the amount of inorganic pigment is 3 to 8 wt.%.

Document US-A_2012/0070626 relates to methods and systems for forming a thin-layer moisture-resistant fiber composite material involve pressing a mixture of fibers and resin between a pair of heated dies at least one of which includes a working surface coated with a hard coating including a cross-linked organically-modified silica network. The coating composition comprises first component with alkoxysilane, 0-5 wt.% inorganic pigments and 5-15 wt.% alcohol. Then second component added comprising 30-50 wt.% colloidal silica, 0.1-5 wt.% TiO2 particles, 0.1-5 wt.% alumina and balance with water.

Document CN104059398 discloses a flexible ceramic non-stick coating composition comprising a first component comprising 30-95 wt.% silica sol, 0-3 wt.% leveling agent, 0-20 wt.% temperature resistant pigment, 0-30 wt.% filler, and water-soluble solvent, and a second component comprising 50-90 wt.% alkoxysilane, 2-4 wt.% epoxysilane, 6-12 wt.% polysiloxane resin having linear organic functional groups, 0.1-1 wt.% acid catalyst, and water-soluble solvent, where the first component and second component are mixed according to weight ratio of 1-3:1. The first component comprises silica sol (30-95 wt.%), inorganic pigments (0-20 wt.%), titanate potassium (0-3 wt.%) and solvent and the second component comprises alkoxysilane (50-90 wt.%) and solvent.

Document JPH01163276 describes a composition giving a coating film having excellent surface hardness, flexibility, heat-resistance, water-resistance and useful as a binder for pigment powder, organic dye by mixing colloidal silica with an organoalkoxysilane, a lead compound and alcohols at specific ratios. The coating is produced by mixing 2 to 50 pts.wt. of colloidal silica and/or colloidal alumina, 2 to 50 pts.wt. of an organoalkoxysilane or its partial hydrolyzate, 0.5 to 15 pts.wt. of a lead compound and 10 to 70 pts.wt. of alcohols and/or glycols.

J But water-based inorganic coatings have obvious friability, very poor flexibility, and larger shrinkage, and these drawbacks result the poor shock resistance. In addition, it is difficult to form a film, and the film of coating is easily to break and appear serious cracks. Meanwhile, the pure inorganic coating needs high temperature for curing. The existing low temperature curing inorganic coating, also called inorganic ceramic coating, can be cured at the temperature of 200°C, thus, there are many problems and inconvenient in the work process. For the defects above mentioned, the water-based inorganic coating is difficult to use widely.

### Summary of the Invention

In order to solve the problems of the organic coating is harmful for the environment, the inorganic coating has bad flexibility, the traditional ceramic coatings need heat and is inconvenient for cured in the prior art, the present invention provides an inorganic coating composition as defined in claim 1 and which can be cured at low temperature and a preparation method thereof. The inorganic coating composition is able to cure at low temperature (e.g. in a temperature range of 10°C to 40°C), the film formed by it has excellent flexibility and will not release the harmful organic gas.

The present invention provides an inorganic coating composition comprising:
70-80wt% of an inorganic solution, wherein the inorganic solution comprises 30-40wt% of an alkoxy silane, 15-20wt% of an organic solvent, and 25-30wt% of a silica sol;
5-10wt% of a first functional additive selected from potassium titanate, alumina or mixtures thereof; the first functional additives also called as functional additives;
10-20wt% of an inorganic pigment; and
0.5-2.0wt% other functional additives.

The inorganic coating composition is 100wt%.

Further, the inorganic coating composition may also comprise deionized water.

Further, the inorganic coating composition may comprise 0.5-1.5wt% other functional additives, in particular 0.5-1.0wt% other functional additives.

The alkoxy silane may be represented by formula R¹ₘSi(OR²)₄₋ₘ where R¹ and R² represent a substituted or non-substituted alkyl group or aryl group comprising n C, where n is 1-10 and m is 0-3. R¹ and/or R² may be at least one of selected from the group including methyl, ethyl, phenyl, CF₃CH₂CH₂, CF₃(CF₂)₅CH₂CH₂, and CF₃(CF₂)₇CH₂CH₂-The silica sol may comprise 20-40wt% silica (SiO₂) particles, the particle size of the silica is from nano-size to micron-size.

The other functional additive may be tourmaline, rare-earth ore or a mixture thereof.

Preferably, the inorganic coating composition comprises 3-5wt% potassium titanate as a first functional additive with a particle size of 1-to 100nm, the potassium titanate having a needle like modification.

Preferably, the alkoxy silane is methyl trimethoxy silane, tetraethoxysilane, phenyl trimethoxy silane, or mixtures thereof.

Preferably, the organic solvent is methanol, ethanol, isopropanol, or a mixture thereof.

Further, in the inorganic coating composition, the inorganic pigment is selected from titanium oxide, yellow chrome, iron blue, cadmium red, cadmium yellow, carbon black, iron oxide red, or iron oxide yellow, or a mixture thereof.

Further, the inorganic coating composition also comprises silane coupling agent. The amount of silane coupling agent is 5-40wt% of the total weight of inorganic coating composition. Further, the silane coupling agent is added into the inorganic coating composition before the inorganic coating composition is applied. The inorganic coating composition before adding the silane coupling agent is called part A, and silane coupling agent is called part B. The weight proportion of part A and part B is 60-95:5-40, the total weight of part A and part B is 100. Before the Part A is applied, the part B is added into the Part A, and put the container which contains part A and part B on the revolving rollers to mix and cure. The curing time is 2-20 hours, the rotation rate of the container is 50-400r/min. Further, the silane coupling agent is a methyl trimethoxyl silane.

Further, in the inorganic coating composition, the "OR²" is hydrolysable alkoxy-silane, which is hydrolysed by water or moisture in the air, or moisture on the surface of substrate, creating "silicon-hydroxyl" (Si-OH) group, which strongly bonds with the surfaces (M-OH) of the substrate through Si-O-M bond, M represents substrate.

Further, the ingredients of the inorganic coating composition may be treated with ultrasonic waves. The frequency of the ultrasonic waves may be more than or equal to 20KHz, the time for treating is 30-40min.

Preferably, the frequency of the ultrasonic waves is 20-25KHz.

Preferably, in the preparing method of the inorganic coating composition, use the ultrasonic waves to deal with the reaction of alkoxy-silane and SiO₂ particles.

Operating theory of ultrasonic dispersion is as below: When applying the ultrasonic waves with frequency of over 20KHz on the object, because the repeatedly strong reduction of the air pressure, the cavitation phenomena is created. When the cavity is broken, partial high temperature, high pressure and air jets are produced. The energy produced by the ultrasonic waves is then used to disperse the particles, break the particles, and get homogenization.

Further, in order to make the powder raw materials disperse perfectly, they are irradiated with ultrasonic waves before using.

Further, in order to make the chemical reaction more completely, the liquid raw materials are irradiated with ultrasonic waves before using.

The present invention provides a method for preparing the inorganic coating composition. The method comprises the following steps:
Prepare the main agent and the curing agent with the ingredients respectively;
A method for preparing the main agent is as below: stirring silica sol first, adding the organic solvent, continuing to stir, adding deionized water, continuing to stir; controlling the react temperature below or equal to 50 degrees Celsius, aforesaid organic solvent is selected from methanol, or ethanol, or isopropanol, or the mixture of two kinds of them at least;
A method for preparing the curing agent is as below: adding the organic alkoxy-silane, functional additives, inorganic pigment, and other functional additives into the deionized water; and mixing evenly.

The main agent and the curing agent are mixed together and filtered through a 325-1000 mesh net to remove the particles and get the inorganic coating composition.

The viscosity of the main agent is usually tested by the Ford Cup. The viscosity is 14-15 seconds usually.

The present invention provides another method for preparing the inorganic coating composition. The method comprises the following steps:
(1) preparing an inorganic solution by mixing 30-40wt% alkoxy silane, with 15-20wt% of an organic solvent, and 25-30% of a silica sol, stirring the mixture at 40-50°C for 5-10 minutes, getting an inorganic solution in sol state;
(2) preparing an inorganic coating mixture by putting 70-80wt% of the inorganic solution generated in step (1), 5-10wt% of a first functional additive, 10-20wt% of an inorganic pigment, and 0.5-2.0wt% of other functional additives together, stirring the mixture, getting the inorganic coating mixture;
(3) putting the inorganic coating mixture generated in step (2) in a homogenizer; stirring it at a high speed for 1-2 hours to make the particles homogenized; and
(4) having the homogenized matter generated in step (3) passing through a 325-1000 mesh net and removing bigger particles, getting the inorganic coating composition which can be cured at low temperature.

Preferably, in the step (1) above mentioned, preparing the inorganic solution: mix the 30-40wt% alkoxy-silane, with the 15-20wt% organic solvent, and 25-30% silica sol, stir the mixture at 40-50°C for 5-10 minutes, when the alkoxy-silane react with silica sol in the mixed solution, heat produced, the mixture turn to be transparent from turbid state gradually; the purpose of adding the organic solvent is modulate the viscosity of the solution and the react speed. Obtaining inorganic solution in sol state by the process above mentioned;

Preferably, in the step (2) above mentioned, stirring the inorganic coating mixture: put 70-80wt% the inorganic solution generated in step (1), 5-10wt% potassium titanate or alumina, 10-20wt% inorganic pigment, and 0.5-2.0wt% other functional additives together, stir the mixture to get the inorganic coating mixture ;

Preferably, in the step (1) above mentioned, preparing the inorganic solution: mix the 30-40wt% alkoxy-silane with the 15-20wt% organic solvent, and 25-30% silica sol, stir the mixture at 40-50°C for 5-10 minutes, at the same time, the ultrasonic waves is radiated on the mixture, at this time, the alkoxy-silane react with silica sol in the mixing solution, heat produced, the mixture is turned to be transparent from turbid state gradually. In the process above mentioned, the ultrasonic waves are applied during the chemical reaction to control the bond angle of the Si-O bond created, thereby to control the direction of molecular structure, to get the controllable growth of the Si-O bond instead of self-growing.

To improve the flexibility of the inorganic coating, the potassium titanate, which have the fibre-likely shape, is used, thus, the potassium titanate is able to improve the flexibility of the materials. The inorganic pigment may use metallic oxide.

The silane may be methyltrimethoxy silane, methyltriethoxy silane, phenyl trimethoxy silane, or a mixture thereof.

The aforesaid inorganic coating composition may be called inorganic ceramic coating.

Further, the method for preparing the inorganic ceramic coating is as below:
Phase 1, preparing the inorganic solution in sol state: mix the 30-40wt% one kind, or two kind at least of alkoxy-silane, with the 25-30% silica sol, stir the mixture at 40-50°C for 5-10 minutes to get inorganic solution in sol state; phase 2, stirring and mixing: put 70-80wt% inorganic solution generated in phase 1, 5-10wt% potassium titanate and/or alumina, 10-20wt% inorganic pigment of titanium oxide, and 0.5-2.0wt% other functional additives together, stir and mix them to get the inorganic coating mixture ; phase 3, put the inorganic coating mixture generated in phase 2 in a homogenizer; stir it at a high speed for 1-2 hours to make the particles homogenized; phase 4, filtering: have the homogenized matter generated in phase 3 pass through a 325-1000 mesh net to eliminate the bigger particles, and get the inorganic ceramic coating.

Further, in the phase for preparing inorganic solution, add organic solvent. Further, in the phase 2, 5-10wt% functional additives comprise 3-5wt% potassium titanate, the particle size of the potassium titanate is 1-100nm.

The structure and theory of the inorganic coating film formed by the inorganic coating composition is as below:
The alkoxy-silane is represented with a molecular formula "R¹ₘSi(OR²)_{4*-*m} ". The "OR²" is hydrolysable alkoxy-silane, which is hydrolysed by water or moisture in the air, or moisture on the surface of substrate to form "silicon-hydroxyl" (Si-OH) group. The (Si-OH) group strongly bonds with the surfaces (M-OH) of the substrate through Si-O-M bond. As shown in table 1, the Si-O bond has higher bond energy than other bond. The inorganic coating film has the features of weather resistance, chemical resistance, abrasive resistance, high hardness, meanwhile owing to the flexibility and resilience of the silicon-oxygen bond, the inorganic coating film also has the features of cold resistance and tolerance to repeating heat shock.

**Table 1 - Bond energy and length of each bond**

| Bond | Bond energy (Kcal/mol) | Bond length (Å) |
|---|---|---|
| Si-H | 76 | 1.48 |
| Si-O | 108 | 1.63 |
| Si-F | 135 | 1.54 |
| C-C | 83 | |

Å is the length unit.

In the present invention, the organic silane forms an inorganic solution through hydrolysis and condensation polymerization under the presence of silicon dioxide (SiO₂). The inorganic solution has "silicon-hydroxyl" (Si-OH) group, and this group generates Si-O-M bond, which has strong bond energy, thereby, the inorganic solution itself can play the role as a strong binder.

Further, the inorganic silane is tetraethoxysilane, or methyl trimethoxy silane, or a mixture thereof, add 20-30% silica sol, and stir the mixture to get the inorganic solution above mentioned. In case the amount of silica sol deviates from the above range, it may weaken the bind force of the Si-O-M, thereby, the film will peel off at a high-temperature.

In addition, in order to improve the physical-chemical characteristics of the film formed by coating composition, potassium titanate or alumina may be used as first functional additive. Since the particles of these materials are needle-shaped or plate-shaped, they may prevent cracks, and control the viscosity of coating composition. The amount of the first functional additive will be in the range of 5-10wt%. If adding the first functional additives less than 5wt%, deterioration of the performance of film may occur, and the surface of the film will be rough. If adding the first functional additives more than 10wt%, gloss and adhesive force of the film will be reduced.

The inorganic coating composition in the present invention may be used as a substitute of the paints in prior art. To this end, it must be colourful. In order to get a variety of colour, the coating in prior art uses the organic pigments or dye, but, these organic matters will cause various problems. Accordingly, the inorganic coating composition in the present invention use pigment of metallic oxide to represent a variety of colour. It is desirable to contain 10-20wt% pigment. In case the amount of pigment added is less than the range, the gloss will be lower; and in case the amount of pigment added is more than the range, the adhesive force between the film and the substrate will be reduced. In addition, to give more properties to the film, the inorganic coating composition in the present invention contains 0.5-2.0wt% other functional additive.

In addition, titanium oxide may be added in the inorganic coating composition in order to get photocatalysis effects. As titanium oxide is activated by light, it can change various pollutants into innocuous matters.

In addition, according to the necessary, in order to release negative ions or radiate far infrared rays, may add the other function additives into the inorganic coating composition. The other function additives comprise the matter which can release negative ions. Generally, tourmalines and rare-earth ores are used as matters which can release negative ions.

Adding function additives gives the coating film flexibility, prevents cracks, and solves the problem of thick film. In order to prepare inorganic coating composition which can be cured at low temperature, use the condensation-polymerizing reaction between silica sol and alkoxy-silane, the coating composition will be cured at low temperature to form the inorganic film. The film has excellent properties, and, is not harmful to human body, and is environmentally safe.

Compared with the prior art, the inorganic coating composition in present invention has excellent properties which do not exist in the prior art. That is, the present invention solves the difficult problem of curing at low temperature for the inorganic coating composition, which can be used on the surface of big building or device. The present invention does not need big baking device, thus does not need boiler, and so on, improves the production efficiency, also saves the fee for fuel, is beneficial to the environment. In addition, the film formed by the inorganic coating composition has good flexibility. In addition, the inorganic coating composition in present invention do not comprise the harmful organic material, easy to use, no smell, have excellent chemical and physical resistance, can maintain the film long time, is not harmful to the human body, will not pollute the environment, ensure the safety, and provide useful result. Further, the film may prevent the release of the harmful substances such as VOCs or formaldehyde, and may reduce the occurrence of the sick house syndromes. In addition, the ingredient of the film is inorganic material, thus, the film will influence environment at the lowest degree when the film is discarded, for the properties of heat and ultraviolet rays resistance, prevent the exfoliation and discoloration, can maintain the beautiful appearance long time.

### Brief Description of the Drawing

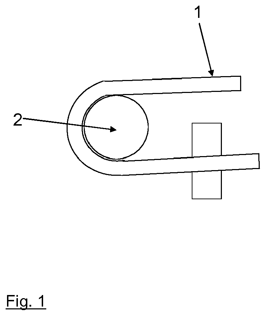

Figure 1 is a structural schematic diagram of the flexibility test of the film formed by the inorganic coating composition in present invention.

### Detailed Description of the Invention

### Example 1

The present invention provides an inorganic coating composition. The preparing method thereof is as below:
(1) Preparing inorganic solution: 30wt% silica sol is mixed with 30wt% of organic silane and 15wt% ethanol, and the mixed solution is stirred at 40-50°C for 5-10 minutes. The organic silane is methyl trimethoxy silane, tetraethoxy silane, or a mixture thereof. The mixed solution of organic silane and silica sol create chemical reaction, the heat is produced, and the mixed solution changes from a turbid state to a transparent state. At this time, add methanol, or ethanol, or isopropanol, or the mixture thereof to control the viscosity and the reaction speed of the solution. The inorganic solution in sol state is made through these processes.
(2) Stirring the mixed solution: the inorganic solution generated in step (1), 9wt% first functional additives, which are potassium titanate or alumina, 15wt% pigment powders of titanium oxide, and 1wt% other functional additives are put in a reactor and mixed and stirred to forming an inorganic ceramic mixture.
(3) Homogenizing: the solution generated in step (2) is put in a homogenizer, and is stirred at a high speed for 1-2 hours to homogenize the particles.
(4) Filtering the coatings: the homogenized matter is passed through a 325-1000 mesh net and remove bigger particles, get the inorganic coating composition.

### Example 2

The present invention provides an inorganic coating composition which can be cured at low temperature. The composition comprises the ingredient as below:
70wt% inorganic solution. The said inorganic solution comprises the following ingredient: 30wt% tetraethoxysilane, 15wt% ethanol, 25wt% silica sol;
10wt% first functional additives, which is mixture of potassium titanate and alumina, wherein the amount of potassium titanate is 3wt%.
19.5wt% inorganic pigment; and
0.5wt% other functional additives, the other functional additive is tourmaline.

The percentage above mentioned is the proportion of each ingredient in the whole of inorganic coating composition, by weight.

### Example 3

The present invention provides an inorganic coating composition which can be cured at low temperature. The composition comprises the ingredient as below:
80wt% inorganic solution. The said inorganic solution comprises the following ingredient: 40wt% the mixture of tetraethoxysilane and methyl trimethoxysilane, the ratio of tetraethoxysilane and methyl trimethoxysilane is 1:1 by weight, 15wt% ethanol, 25wt% silica sol;
5wt% functional additives, which are a mixture of potassium titanate and alumina, the amount of potassium titanate is 4wt%;
13wt% inorganic pigment; and
2.0wt% other functional additives, the other functional additive is tourmaline.

The percentage above mentioned is the proportion of each ingredient in the whole of inorganic coating composition, by weight.

### Example 4

The present invention provides an inorganic coating composition which can be cured at low temperature. The composition comprises the ingredient as below:
80wt% inorganic solution. The said inorganic solution comprises the following ingredient: 30wt% methyl trimethoxysilane, 20wt% ethanol, 30wt% silica sol;
6wt% functional additives, which are a mixture of potassium titanate and alumina, the amount of potassium titanate is 5wt%;
13wt% inorganic pigment; and
1wt% other functional additives, the other functional additive is rare-earth ore.

The percentage above mentioned is the proportion of each ingredient in the whole of inorganic coating composition, by weight.

### Example 5

The present invention provides an inorganic coating composition which can be cured at low temperature. The composition comprises the ingredient as below:
74.5wt% inorganic solution, the said inorganic solution comprises the following ingredient: 30wt% methyl triethoxy silane, 15wt% ethanol, 29.5wt% silica sol;
5wt% functional additives, which are potassium titanate;
20wt% inorganic pigment; and
0.5wt% other functional additives, the other functional additive is rare-earth ore.

The percentage above mentioned is the proportion of each ingredient in the whole of inorganic coating composition, by weight.

### Example 6

The present invention provides an inorganic coating composition which can be cured at low temperature. The composition comprises the ingredient as below:
77wt% inorganic solution. The said inorganic solution comprises the following ingredient: 35wt% organic alkoxy-silane, 15wt% ethanol, 27wt% silica sol;
7wt% functional additives, which are potassium titanate;
15wt% of inorganic pigment; and
1wt% other functional additives, the other functional additive is the mixture of tourmaline and rare-earth ore, the ratio of tourmaline and rare-earth ore is 1:1 by weight.

The percentage above mentioned is the proportion of each ingredient in the whole of inorganic coating composition, by weight.

The alkoxy-silane is represented by molecular formula R¹ₘSi(OR²)₄₋ₘ, wherein R² is phenyl and m is 0.

### Example 7

An inorganic coating composition as shown in the example 6, wherein the organic alkoxy-silane is represented by molecular formula R¹ₘSi(OR²)₄₋ₘ, wherein R¹ is CF₃CH₂CH₂, R² is CF₃CH₂CH₂ and m is 1.

### Example 8

An inorganic coating composition as shown in the example 6, wherein the organic alkoxy-silane is represented by molecular formula R¹ₘSi(OR²)₄₋ₘ ,wherein R¹ is CF₃ (CF₂)₅CH₂CH₂, R² is CF₃ (CF₂)₅CH₂CH₂ and m is 2.

### Example 9

An inorganic coating composition as shown in the example 6, wherein the organic alkoxy-silane is represented by molecular formula R¹ₘSi(OR²)₄₋ₘ, wherein R¹ is CF₃ (CF₂)₇CH₂CH₂, R² is CF₃ (CF₂)₇CH₂CH₂, and m is 3.

### Example 10

An inorganic coating composition as shown in the example 6, wherein the organic alkoxy-silane is represented by molecular formula R¹ₘSi(OR²)₄₋ₘ, wherein R¹ is methyl, R² is phenyl, and m is 1.

### Example 11

An inorganic coating composition as shown in the example 6, wherein the organic alkoxy-silane is represented by molecular formula R¹ₘSi(OR²)₄₋ₘ, wherein R¹ is ethyl, R² is CF₃CH₂CH₂, and m is 1.

### Example 12

An inorganic coating composition as shown in the example 6, wherein the organic alkoxy-silane is represented by molecular formula R¹ₘSi(OR²)₄₋ₘ, wherein R¹ is phenyl, R² is CF₃(CF₂)₇CH₂CH₂, and m is 2.

### Example 13

An inorganic coating composition as shown in the example 6, wherein the organic alkoxy-silane is represented by molecular formula R¹ₘSi(OR²)₄₋ₘ, wherein R¹ is CF₃CH₂CH₂, R² is methyl, and m is 3.

### Example 14

An inorganic coating composition as shown in the example 6, wherein the organic alkoxy-silane is represented by molecular formula R¹ₘSi(OR²)₄₋ₘ, wherein R¹ is CF₃(CF₂)₅CH₂CH, R² is methyl and ethyl, and m is 2.

### Example 15

An inorganic coating composition as shown in the example 6, wherein the organic alkoxy-silane is represented by molecular formula R¹ₘSi(OR²)₄₋ₘ, wherein R¹ is CF₃ (CF₂)₇CH₂CH₂, R² is phenyl, and m is 1.

### Example 16

An inorganic coating composition as shown in example 6, wherein the organic alkoxy-silane is phenyl trimethoxysilane.

Coat the inorganic coating composition provided by the examples on the substrate, form a film, the thickness of the film is 30±5µm, the substrate is aluminum plate. The size of the aluminum plate is 15 cm ×7.5cm, the coating is curing at low temperature for 7 days, form hard film.

The test result and the test data of the film formed by the inorganic coating composition provided by the example 1-16 are shown in table 2 and table 3.

**Table 2 summarizes the test conditions for testing of films formed by the inorganic coating compositions provided by example 1-16.**

| Test item | Test result | Test condition |
|---|---|---|
| Gloss | 0-70 | Gloss test device (60°standard) |
| Pencil hardness | 7-9 H | Mitsubishi pencil |
| Adhesive force | 100/100 | one hundred grid method, 1 m/m |
| Shock resistance | no abnormality | 1 kg ball, 50cm height |
| abrasive resistance | 99.99 | abrasive coefficient |
| Pollution resistance | non-pollution | 5E Max |
| Acid resistance | no abnormality | 5%H₂SO₄, 48 hours |
| Alkali resistance | no abnormality | 5%Na₂CO₃/15 minutes×4times |
| Boiling water resistance | no abnormality | 98°C×2 hours |
| Heat resistance | no abnormality | 300°C×1 hours |
| Salt water resistance, | no abnormality | 5%NaCl×1000 hours |
| Weather resistance | no abnormality | WeatheR1-O-MeteR1, 1000 hours |
| Colour | Many kinds | - |

**Table 3 shows the test data of the films formed by the inorganic coating composition provided by example 1-16.**

| No. | gloss % | Pencil hardness | Adhesive force |
|---|---|---|---|
| example 1 | 45-55 | 7-9 H | 0 grade |
| example 2 | 45-55 | 7-9 H | 0 grade |
| example 3 | 35-45 | 8-9 H | 1 grade |
| example 4 | 45-55 | 7-9 H | 1 grade |
| example 5 | 40-50 | 7-9 H | 0 grade |
| example 6 | 40-50 | 7-9 H | 0 grade |
| example 7 | 40-50 | 7-9 H | 0 grade |
| example 8 | 45-55 | 7-9 H | 0 grade |
| example 9 | 30-35 | 6-9 H | 0 grade |
| example 10 | 30-35 | 6-9 H | 1 grade |
| example 11 | 45-50 | 7-9 H | 0 grade |
| example 12 | 45-55 | 7-9 H | 0 grade |
| example 13 | 25-30 | 6-8 H | 1 grade |
| example 14 | 30-35 | 7-8 H | 0 grade |
| example 15 | 40-50 | 7-9 H | 0 grade |
| example 16 | 40-50 | 7-9 H | 0 grade |

Flexibility test: The inorganic coating composition in present invention is coated on the soft substrate, and the composition is cured to form a film. The substrate is a bendable aluminum sheet. The thickness of the substrate is 0.3mm. The thickness of the film is 20-25µm. As shown in Figure 1, putting the rod 2 on the film 1, the diameter of the rod 2 is 9.5mm. The substrate is bent along the rod, the substrate with film may be bent to parallel to the horizontal plane to twine around the rod. There are no cracks on the surface of the bent film.

The flexibility of the film formed by the inorganic coating composition may also be evaluated by the scratch test, or pendulum hardness test. The scratch test and the pendulum hardness test are as below.

Because the film formed by the water-base PU Acrylic coating has excellent flexibility, it is used as a reference. The flexibility of the film formed by the inorganic coating composition in present invention is tested. The flexibility of the film formed by water-base PU Acrylic coating is tested as well for comparing the test results and evaluating the flexibility of the film formed by the inorganic coating composition in present invention.

Scratch test, use the break through force to represent the test result. The test method includes the steps as below:
(1) Coat the coating composition on steel substrate, form the film with fixed thickness;
(2) A needle is placed on the film;
(3) Apply a force on the needle, and push the needle to move on in the film: in 60 seconds, the force is increased from 0N to 100N;
(4) Meanwhile the needle is moved 1cm on the film;
(5) Observe and record the data of the force when the film is broken.

The standard of broke is as below: wash the film with water, the film is peeled off the substrate and the substrate is seen clearly. When the force of breaking the film is bigger, the film is more resistant to the scratch and the flexibility of the film is better.

Pendulum hardness test, the test method includes steps as below:
(1) Coat the coating composition on steel substrate, form the film with fixed thickness;
(2) A pendulum is swung on the coated substrate;
(3) Pendulum is resting on two balls.
(4) Softness of substrate is damping the oscillation;
(5) Pendulum hardness is given as time in seconds it takes to decrease the amplitude from 6° to 3°.

When the time is longer, the pendulum hardness of the film is higher and the flexibility of the film is worse.

Pencil hardness test: fix the Mitsubishi pencil on the hardness test device at 45° angle, apply force of 1 Kg on the pencil and push the pencil moving forward.

Adhesive force test: use the one hundred grid method.

Abrasive test: use the abrasive test device (Model KPM-042), the wheel used is CS-10 wheel, put the sample on the test device, load 500g of gravity and turn 500 circles. Then, use the UV spectrophotometer to test the absorbance of the surface of the sample at 370 nm, observe whether the surface turn to indistinct or not. Test the abrasive resistance at last.

### Comparative example 1

Prepare an inorganic coating composition, the preparation method thereof is as below:
(1) Preparing inorganic solution: 35% silica sol is mixed with 100wt% methyl trimethoxy silane, and the mixed solution is stirred at 50°C for 10 minutes, add ethanol to control the viscosity, and the inorganic solution is obtained.
(2) Mixing 60wt% inorganic solution generated in step (1), with 20wt% potassium titanate, 8wt% pigment of iron oxide, and 12wt% rare-earth ore to form an inorganic ceramic mixture.
(3) Homogenizing: the solution obtained in step (2) is put in a homogenizer, and is stirred at a high speed for 2 hours to homogenize the particles.
(4) Filtering coatings: the homogenized matter generated in step (3) is passed through a 325-1000 mesh net to remove the bigger particles and get the coating composition.

Coat the composition in comparative example 1 on substrate of aluminum plate, the result is as below:
1. The film formed has cracks;
2. Shocking resistance: 1 Kg ball, fall from the height of 50cm, the film peel off from the substrate.

### Comparative example 2

Prepare an inorganic coating composition. The composition comprises the ingredient as below:
70wt% inorganic solution,
12wt% functional additives, which is potassium titanate.
17.5wt% inorganic pigment; and
0.5wt% other functional additives, the other functional additive is tourmaline;
The said inorganic solution comprises the following ingredient: 30wt% methyl trimethoxysilane, 15wt% ethanol, 25wt% silica sol;
The percentage above mentioned is the proportion of each ingredient in the whole of inorganic coating composition, by weight.

Compared with the composition provided by the present invention, the amount of function additive is higher.

### Comparative example 3

An inorganic coating composition, the composition comprises the ingredient as below:
80wt% inorganic solution,
3wt% functional additives, which are alumina;
15wt% inorganic pigment;
2.0wt% other functional additives;
The said inorganic solution comprises the following ingredient: 40wt% tetraethoxysilane, 15wt% isopropanol, 25wt% silica sol;
The percentage above mentioned is the proportion of each ingredient in the whole of inorganic coating composition, by weight.

Compared with the composition provided by the present invention, the amount of function additive is lower.

### Comparative example 4

An inorganic coating composition, the composition comprises the ingredient as below:
80wt% inorganic solution;
9wt% of functional additives, which are potassium titanate;
10wt% inorganic pigment;
1wt% other functional additives;
The said inorganic solution comprises the following ingredient: 45wt% methyl trimethoxysilane, 15wt% ethanol, 20wt% silica sol;
The percentage above mentioned is the proportion of each ingredient in the whole of inorganic coating composition, by weight.

Compared with the composition provided by the present invention, the amount of organic alkoxy-silane is higher, the amount of silica sol is lower.

### Comparative example 5

An inorganic coating composition, the composition comprises the ingredient as below:
75wt% inorganic solution;
10wt% functional additives, which are potassium titanate;
13wt% inorganic pigment;
2.0wt% other functional additives;
The said inorganic solution comprises the following ingredient: 25wt% methyl trimethoxysilane, 15wt% ethanol, 35wt% silica sol;
The percentage above mentioned is the proportion of each ingredient in the whole of inorganic coating composition, by weight.

Compared with the composition provided by the present invention, the amount of organic alkoxy-silane is lower, the amount of silica sol is higher.

### Comparative example 6

An inorganic coating composition, the composition comprises the ingredient as below:
90wt% inorganic solution;
5wt% functional additives, which are alumina;
3wt% inorganic pigment;
2.0wt% other functional additives;
The said inorganic solution comprises the following ingredient: 40wt% organic alkoxy-silane, 20wt% isopropanol, 30wt% silica sol;
The percentage above mentioned is the proportion of each ingredient in the whole of inorganic coating composition, by weight.

Compared with the composition provided by the present invention, the amount of inorganic solution is higher, the amount of inorganic pigment is lower.

### Comparative example 7

An inorganic coating composition, the composition comprises the ingredient as below:
65wt% inorganic solution;
10wt% functional additives, which are the mixture of potassium titanate and alumina, the ratio of potassium titanate and alumina is 1:1 by weight;
23wt% inorganic pigment;
2.0wt% other functional additives;
The said inorganic solution comprises the following ingredient: 30wt% organic alkoxy-silane, 10wt% isopropanol, 25wt% silica sol;
The percentage above mentioned is the proportion of each ingredient in the whole of inorganic coating composition, by weight.

Compared with the composition provided by the present invention, the amount of inorganic solution is lower, the amount of inorganic pigment is higher.

The properties of the product of comparative examples 2-7 are shown in the table 4.

**Table 4 shows the properties of the product of comparative examples 2-7.**

| No. | coating and the film state | Gloss % | Pencil hardness | Adhesive force | Shock resistance |
|---|---|---|---|---|---|
| Comparative example 2 | High viscosity, difficult to form the film | flat gloss | 3-5H | 2 grade | film peels off |
| Comparative example 3 | - | 40-50 | 6-7H | 1 grade | film cracks |
| Comparative example 4 | High viscosity, the film is unqualified | flat gloss | 4-5H | 1-2grade | film peels off |
| Comparative example 5 | High viscosity, the film is unqualified | flat gloss | 4-5H | 1-2 grade | film peels off |
| Comparative example 6 | Cannot cover the substrate | 10-20 | 5-6H | 1 grade | film cracks |
| Comparative example 7 | High viscosity, the film is unqualified | 10-20 | 4-5H | 1-2 grade | film peels off |

We can conclude from the test results of the examples and the comparative examples, the inorganic coating composition in present invention may cure at low temperature, the film formed has high hardness, acid resistance, alkali resistance, salt water resistance, weather resistance, and has good adhesive force.

The flexibility of the film formed by the inorganic coating composition in present invention is tested by scratch test and pendulum hardness test. The flexibility of the film formed by water-base PU Acrylic coating is tested as well by scratch test and pendulum hardness test. The test results are shown in table 5. The test results can be used to compare and evaluate the flexibility of the film formed by the coating composition in present invention.

**Table 5 Test result of the scratch test and pendulum hardness test**

| | film formed by the inorganic coating composition in present invention | the film formed by water-base PU Acrylic coating | Evaluation of the flexibility |
|---|---|---|---|
| Break through force /N | 37 | 39 | Break through force of the film formed by the coating in the present invention is very close to the break through force of the film formed by the water-base PU Acrylic coating. The test result state: the flexibility of two kinds of films are at the same level. |
| Pendulum hardness/s | 167 | 180 | The time spent on the film formed by the coating in the present invention is shorter than the time spent on the film formed by the water-base PU Acrylic coating. The test result state: the flexibility of two kinds of films is at the same level. The film formed by the coating composition in the present invention may slow down the shock better, that is, The film formed by the coating composition in the present invention has better flexibility. |

We can conclude from the above test result, the film formed by the coating composition in the present invention has excellent flexibility, and the flexibility is very close to the flexibility of the film formed by the water-base PU Acrylic coating.

## Claims

1. An inorganic coating composition comprising:
70-80wt% of an inorganic solution, wherein the inorganic solution comprises 30-40wt% of an alkoxy silane, 15-20wt% of an organic solvent, and 25-30wt% of a silica sol;
5-10wt% of a first functional additive selected from potassium titanate, alumina or mixtures thereof;
10-20wt% of an inorganic pigment selected from titanium oxide, yellow chrome, iron blue, cadmium red, cadmium yellow, carbon black, iron oxide red, or iron oxide yellow, or a mixture thereof; and
0.5-2.0wt% other functional additives.

2. The inorganic coating composition of claim 1, wherein the alkoxy silane is represented by formula R¹ₘSi(OR²)₄₋ₘ where R¹ and R² represent a substituted or non-substituted alkyl group or aryl group comprising n C, where n is 1-10 and m is 0-3.

3. The inorganic coating composition of claim 2, wherein R¹ and/or R² are at least one of selected from the group including methyl, ethyl, phenyl, CF₃CH₂CH₂, CF₃(CF₂)₅CH₂CH₂, and CF₃(CF₂)₇CH₂CH₂.

4. The inorganic coating composition of claim 1, wherein the silica sol comprises 20-40wt% silica (SiO₂) particles, the particle size of the silica is from nano-size to micron-size.

5. The inorganic coating composition of claim 1, wherein the other functional additive is tourmaline, rare-earth ore or a mixture thereof.

6. The inorganic coating composition of claim 1, wherein the inorganic coating composition comprises 3-5wt% potassium titanate as a first functional additive with a particle size of 1 to 100nm, the potassium titanate having a needle like modification.

7. The inorganic coating composition of to claim 2, wherein the alkoxy silane is methyl trimethoxy silane, tetraethoxysilane, phenyl trimethoxy silane, or mixtures thereof.

8. The inorganic coating composition of claim 1, wherein the organic solvent is methanol, ethanol, isopropanol, or a mixture thereof.

9. A method for preparing the inorganic coating composition according to claim 1, wherein the method comprises the following steps:
(1) preparing an inorganic solution by mixing 30-40wt% alkoxy silane, with 15-20wt% of an organic solvent, and 25-30% of a silica sol, stirring the mixture at 40-50°C for 5-10 minutes, getting an inorganic solution in sol state;
(2) preparing an inorganic coating mixture by putting 70-80wt% of the inorganic solution generated in step (1), 5-10wt% of a first functional additive, 10-20wt% of an inorganic pigment, and 0.5-2.0wt% of other functional additives together, stirring the mixture, getting the inorganic coating mixture;
(3) putting the inorganic coating mixture generated in step (2) in a homogenizer; stirring it at a high speed for 1-2 hours to make the particles homogenized; and
(4) having the homogenized matter generated in step (3) passing through a 325-1000 mesh net and removing bigger particles, getting the inorganic coating composition which can be cured at low temperature.

10. The method of claim 9, wherein the ingredients of the inorganic coating composition are treated by ultrasonic waves.

11. The method of claim 10, wherein, a frequency of the ultrasonic waves is equal or more than 20KHz and the time for dealing is 30-40min.

## Patentansprüche

1. Anorganische Beschichtungszusammensetzung, umfassend:
70 - 80 Gew.-% einer anorganischen Lösung, wobei die anorganische Lösung 30 - 40 Gew.-% eines Alkoxysilans, 15 - 20 Gew.-% eines organischen Lösemittels und 25 - 30 Gew.-% eines Silicasols umfasst;
5 - 10 Gew.-% eines ersten funktionellen Additivs, das ausgewählt ist aus Kaliumtitanat, Aluminiumoxid oder Mischungen davon;
10 - 20 Gew.-% eines anorganischen Pigments, das ausgewählt ist aus Titanoxid, Chromgelb, Eisenblau, Cadmiumrot, Cadmiumgelb, Kohlenstoffschwarz, Eisenoxidrot oder Eisenoxidgelb, oder einer Mischung davon; und
0,5 - 2,0 Gew.-% andere funktionelle Additive.

2. Anorganische Beschichtungszusammensetzung nach Anspruch 1, wobei das Alkoxysilan durch die Formel R¹ₘSi(OR²)₄₋ₘ dargestellt ist, wobei R¹ und R² eine substituierte oder unsubstituierte Alkylgruppe oder Arylgruppe darstellen, die n C-Atome umfasst, wobei n gleich 1 - 10 und m gleich 0 - 3 ist.

3. Anorganische Beschichtungszusammensetzung nach Anspruch 2, wobei R¹ und/oder R² mindestens eines sind, das ausgewählt ist aus der Gruppe umfassend Methyl, Ethyl, Phenyl, CF₃CH₂CH₂, CF₃(CF₂)₅CH₂CH₂ und CF₃(CF₂)₇CH₂CH₂.

4. Anorganische Beschichtungszusammensetzung nach Anspruch 1, wobei das Silicasol 20 - 40 Gew.-% Siliciumdioxid (SiO₂)-Teilchen umfasst, wobei die Teilchengröße des Siliciumdioxids von Nanogröße bis Mikrometergröße ist.

5. Anorganische Beschichtungszusammensetzung nach Anspruch 1, wobei das andere funktionelle Additiv Turmalin, Seltenerderz oder eine Mischung davon ist.

6. Anorganische Beschichtungszusammensetzung nach Anspruch 1, wobei die anorganische Beschichtungszusammensetzung 3 - 5 Gew.-% Kaliumtitanat als ein erstes funktionelles Additiv mit einer Teilchengröße von 1 bis 100 nm umfasst, wobei das Kaliumtitanat eine nadelartige Modifikation aufweist.

7. Anorganische Beschichtungszusammensetzung nach Anspruch 2, wobei das Alkoxysilan ein Methyltrimethoxysilan, Tetraethoxysilan, Phenyltrimethoxysilan oder Mischungen davon ist.

8. Anorganische Beschichtungszusammensetzung nach Anspruch 1, wobei das organische Lösemittel Methanol, Ethanol, Isopropanol oder eine Mischung davon ist.

9. Verfahren zur Herstellung der anorganischen Beschichtungszusammensetzung nach Anspruch 1, wobei das Verfahren die folgenden Schritte umfasst:
(1) Herstellen einer anorganischen Lösung durch Mischen von 30 - 40 Gew.-% Alkoxysilan mit 15 - 20 Gew.-% eines organischen Lösemittels und 25 - 30 % eines Silicasols, Rühren der Mischung bei 40 - 50 °C für 5 - 10 Minuten, um eine anorganische Lösung im Sol-Zustand zu bekommen;
(2) Herstellen einer anorganischen Beschichtungsmischung durch Zusammengeben von 70 - 80 Gew.-% der in Schritt (1) erzeugten anorganischen Lösung, 5 - 10 Gew.-% eines ersten funktionellen Additivs, 10 - 20 Gew.-% eines anorganischen Pigments und 0,5 - 2,0 Gew.-% von anderen funktionellen Additiven, Rühren der Mischung, Erhalten der anorganischen Beschichtungsmischung;
(3) Einbringen der in Schritt (2) erzeugten anorganischen Beschichtungsmischung in einen Homogenisator; Rühren mit einer hohen Geschwindigkeit für 1 - 2 Stunden, um die Teilchen homogen verteilt zu machen; und
(4) Hindurchgeben von dem in Schritt (3) erzeugten homogenisierten Material durch ein Netz mit einer Maschenweite von 325 - 1.000 Mesh und Entfernen von größeren Teilchen, wobei die anorganische Beschichtungszusammensetzung erhalten wird, die bei niedriger Temperatur gehärtet werden kann.

10. Verfahren nach Anspruch 9, wobei die Bestandteile der anorganischen Beschichtungszusammensetzung durch Ultraschallwellen behandelt werden.

11. Verfahren nach Anspruch 10, wobei eine Frequenz der Ultraschallwellen gleich oder größer als 20 kHz ist und die Zeit für die Behandlung 30 - 40 min beträgt.

## Revendications

1. Composition de revêtement inorganique comprenant :
entre 70 et 80 % en poids d'une solution inorganique, dans laquelle la solution inorganique comprend entre 30 et 40 % en poids d'un alcoxy silane, entre 15 et 20 % en poids d'un solvant organique, et entre 25 et 30 % en poids d'un sol de silice ;
entre 5 et 10 % en poids d'un premier additif fonctionnel choisi parmi le titanate de potassium, l'alumine ou des mélanges de ceux-ci ;
entre 10 et 20 % en poids d'un pigment inorganique choisi parmi l'oxyde de titane, le chrome jaune, le fer bleu, le cadmium rouge, le cadmium jaune, le charbon noir, l'oxyde de fer rouge, l'oxyde de fer jaune, ou un mélange de ceux-ci ; et
entre 0,5 et 2,0 % en poids d'autres additifs fonctionnels.

2. Composition de revêtement inorganique selon la revendication 1, dans laquelle l'alcoxy silane est représenté par la formule R¹ₘSi(OR²)₄₋ₘ où R¹ et R² représentent un groupe alkyle substitué ou non substitué ou un groupe aryle comprenant n C, où n vaut entre 1 et 10 et m vaut entre 0 et 3.

3. Composition de revêtement inorganique selon la revendication 2, dans laquelle R¹ et/ou R² représentent au moins un choisi parmi le groupe comprenant le méthyle, l'éthyle, le phényle, CF₃CH₂CH₂, CF₃(CF₂)₅CH₂CH₂, et CF₃(CF₂)₇CH₂CH₂.

4. Composition de revêtement inorganique selon la revendication 1, dans laquelle le sol de silice comprend entre 20 et 40 % en poids de particules de silice (SiO₂), la taille des particules de la silice est comprise entre nanométrique et micrométrique.

5. Composition de revêtement inorganique selon la revendication 1, dans laquelle l'autre additif fonctionnel est la tourmaline, un minerai de terre rare ou un mélange de ceux-ci.

6. Composition de revêtement inorganique selon la revendication 1, dans laquelle la composition de revêtement inorganique comprend entre 3 et 5 % en poids de titanate de potassium en tant que premier additif fonctionnel muni d'une taille de particule comprise entre 1 et 100 nm, le titanate de potassium possédant une modification de type aiguille.

7. Composition de revêtement inorganique selon la revendication 2, dans laquelle l'alcoxy silane est le méthyl triméthoxy silane, le tétraéthoxy silane, le phényl triméthoxy silane, ou des mélanges de ceux-ci.

8. Composition de revêtement inorganique selon la revendication 1, dans laquelle le solvant organique est le méthanol, l'éthanol, l'isopropanol, ou un mélange de ceux-ci.

9. Procédé de préparation de la composition de revêtement inorganique selon la revendication 1, dans lequel le procédé comprend les étapes suivantes consistant à :
(1) préparer une solution inorganique en mélangeant entre 30 et 40 % en poids d'alcoxy silane avec entre 15 et 20 % en poids d'un solvant organique, et entre 25 et 30 % d'un sol de silice, remuer le mélange à une température comprise entre 40 et 50 °C pendant une période de temps compris entre 5 et 10 minutes, obtenir une solution inorganique dans un état de sol ;
(2) préparer un mélange de revêtement inorganique en plaçant entre 70 et 80 % en poids de la solution inorganique générée lors de l'étape (1), entre 5 et 10 % en poids d'un premier additif fonctionnel, entre 10 et 20 % en poids d'un pigment inorganique, et entre 0,5 et 2,0 % en poids d'autres additifs fonctionnels ensemble, remuer le mélange, obtenir le mélange de revêtement inorganique ;
(3) mettre le mélange de revêtement inorganique généré lors de l'étape (2) dans un homogénéisateur ; le mélanger à une vitesse élevée pendant une période de temps comprise entre 1 et 2 heures pour rendre les particules homogénéisés ; et
(4) faire passer la matière homogénéisée générée lors de l'étape (3) à travers un filet à mailles de 325 - 1000 et éliminer les particules les plus grosses, obtenir la composition de revêtement inorganique qui peut être durcie à basse température.

10. Procédé selon la revendication 9, dans lequel les ingrédients de la composition de revêtement inorganique sont traités par des ondes ultrasoniques.

11. Procédé selon la revendication 10, dans lequel une fréquence des ondes ultrasoniques est supérieure ou égale à 20 kHz et le temps d'opération est compris entre 30 et 40 minutes.
